(19) Europäisches Patentamt / European Patent Office / Office européen des brevets

(11) **EP 3 370 381 B1**

(12) **FASCICULE DE BREVET EUROPÉEN**

(45) Date de publication et mention de la délivrance du brevet:
**02.08.2023 Bulletin 2023/31**

(21) Numéro de dépôt: **18159085.2**

(22) Date de dépôt: **28.02.2018**

(51) Classification Internationale des Brevets (IPC):
**H04L 27/26** (2006.01)    **H04B 7/12** (2006.01)

(52) Classification Coopérative des Brevets (CPC):
**H04L 27/2647; H04L 27/26416; H04L 27/2654; H04L 27/2698;** H04B 7/0413

(54) **SYSTÈME D'ÉMISSION/RÉCEPTION FBMC-MIMO À DÉTECTION ML**

FBMC-MIMO-SENDE-/EMPFANGSSYSTEM MIT ML-ERFASSUNG

SYSTEM FOR TRANSMITTING/RECEIVING FBMC-MIMO WITH ML DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2017 FR 1751697**

(43) Date de publication de la demande:
**05.09.2018 Bulletin 2018/36**

(73) Titulaire: **Commissariat à l'Energie Atomique et aux Energies Alternatives**
**75015 Paris (FR)**

(72) Inventeur: **DORE, Jean-Baptiste**
**38120 FONTANIL-CORNILLON (FR)**

(74) Mandataire: **Brevalex**
**56, Boulevard de l'Embouchure**
**B.P. 27519**
**31075 Toulouse Cedex 2 (FR)**

(56) Documents cités:
**CN-A- 106 712 903**

- **Ana I Pérez-Neira ET AL: "Low-complexity soft-output MIMO detection in FBMC/OQAM systems arius Caus", , 31 juillet 2014 (2014-07-31), XP055423270, Extrait de l'Internet: URL:http://www.inase.org/library/2014/santorini/bypaper/COMMUN/COMMUN-01.pdf[extrait le 2017-11-09]**

- **BELLANGER M ED - JAFFRES-RUNSER K ET AL: "Transmit diversity in multicarrier transmission using OQAM modulation", WIRELESS PERVASIVE COMPUTING, 2008. ISWPC 2008. 3RD INTERNATIONAL SYMPOSIUM ON, IEEE, PISCATAWAY, NJ, USA, 7 mai 2008 (2008-05-07), pages 727-730, XP031281336, ISBN: 978-1-4244-1652-3**

- **ZHIQIANG LIU ET AL: "Linear constellation-precoding for OFDM with maximum multipath diversity and coding gains", CONFERENCE RECORD OF THE 35TH. ASILOMAR CONFERENCE ON SIGNALS, SYSTEMS, & COMPUTERS. PACIFIC GROOVE, CA, NOV. 4 - 7, 2001; [ASILOMAR CONFERENCE ON SIGNALS, SYSTEMS AND COMPUTERS], NEW YORK, NY : IEEE, US, 4 November 2001 (2001-11-04), pages 1445-1449vol.2, XP032139932, DOI: 10.1109/ACSSC.2001.987728 ISBN: 978-0-7803-7147-7**

- **MCCLOUD M L: "Analysis and Design of Short Block OFDM Spreading Matrices for Use on Multipath Fading Channels", IEEE TRANSACTIONS ON COMMUNICATIONS, IEEE SERVICE CENTER, PISCATAWAY, NJ. USA, vol. 53, no. 4, 1 April 2005 (2005-04-01), pages 656-665, XP011131338, ISSN: 0090-6778, DOI: 10.1109/TCOMM.2005.844919**

**Description**

**DOMAINE TECHNIQUE**

La présente invention concerne de manière générale le domaine des systèmes de télécommunication utilisant une modulation multi-porteuse à banc de filtres, encore dénommés systèmes FBMC (*Filter Bank Multi-Carrier*). Il concerne en outre les systèmes de télécommunication MIMO (*Multiple Input Multiple Output).*

**ÉTAT DE LA TECHNIQUE ANTÉRIEURE**

Les systèmes de télécommunication utilisant une modulation multi-porteuse sont bien connus de l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (*Orthogonal Frequency Division Multiplexing*). Celle-ci est mise en oeuvre dans les réseaux locaux sans fil WLAN, WiFi, dans l'accès internet sans fil à haut débit (WiMAX), les systèmes de radiodiffusion numérique (DVB-T, ISDB-T, DAB), les liaisons numériques asymétriques (xDSL) etc.

Dans un système de transmission OFDM, chaque bloc de symboles OFDM est précédé d'un intervalle de garde ou bien d'un préfixe cyclique, de longueur supérieure à l'étalement temporel de la réponse impulsionnelle du canal, de manière à éliminer l'interférence intersymbole. L'insertion d'un intervalle de garde ou d'un préfixe conduit toutefois à une perte d'efficacité spectrale. Enfin, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande.

Plus récemment, une modulation multi-porteuse par banc de filtres ou FBMC (*Filter Bank Multi Carrier*) a été proposée comme alternative à la modulation OFDM.

Le principe de la modulation FBMC est basé sur une synthèse par banc de filtres à l'émission et une analyse par banc de filtres à la réception. Les filtres à l'émission et à la réception sont des versions décalées en fréquence et en temps d'un filtre prototype.

On trouvera une introduction à la modulation FBMC dans l'article de B. Hirosaki intitulé « An orthogonally multiplexed QAM system using the discrète Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002.

Un système d'émission/réception FBMC est susceptible de représentation dans le domaine temporel ou, de manière duale, dans le domaine fréquentiel. On trouvera une description de ces deux représentations dans la demande publiée sous la référence FR-A-3003420 déposée au nom de la présente demanderesse.

De manière générale, si l'on note $x_{k,n}$ les symboles réels à transmettre (ces symboles réels pouvant notamment être les parties réelles et imaginaires de symboles QAM à transmettre), où $k$ est l'indice de la sous-porteuse et $n$ est l'indice du bloc de symboles, le signal émis par l'émetteur FBMC peut s'écrire en bande de base sous la forme :

$$s(t) = \sum_{k=0}^{M-1}\sum_{n\in\mathbb{Z}} x_{k,n} g(t-n\frac{T}{2})e^{j\frac{2\pi}{T}kT}e^{j\phi_{k,n}} \qquad (1)$$

où $g(t)$ est la réponse du filtre prototype, $T$ est l'intervalle de temps séparant deux blocs de symboles consécutifs, et :

$$\phi_{k,n} = \frac{\pi}{2}(k+n) - \pi kn \qquad (2)$$

est un terme de phase dépendant de l'indice temporel $n$ et de l'indice de porteuse $k$.

L'expression (1) peut s'écrire de manière équivalente sous forme discrète :

$$s(m) = \sum_{k=0}^{M-1}\sum_{n\in\mathbb{Z}} x_{k,n} g_{k,n}(m) \qquad (3)$$

où

$$g_{k,n}(m) = g\left(m - nM/2\right) e^{j\frac{2\pi}{M}k(m-D/2)} e^{j\phi_{k,n}} \qquad (4)$$

est la réponse du banc de filtres de synthèse avec la modulation OQAM, $e^{j\phi_{k,n}}$ étant le terme de phase précité, $m$ est un indice temporel, $M$ est le nombre (pair) de sous-porteuses, $g(m)$ est la réponse du filtre prototype, $g_{k,n}(m)$ est une version décalée en temps et en fréquence de la réponse du filtre prototype, pondérée par un terme de phase représentant la modulation OQAM, $D = KM - 1$ où $K$ est le facteur de recouvrement des filtres de synthèse, ou de manière équivalente la durée de réponse impulsionnelle du filtre prototype.

En supposant le canal peu sélectif en fréquence (autrement dit plat au sein d'un sous-canal) et sans délai, la réponse du filtre transmultiplexeur (c'est-à-dire de l'association du banc de filtres de synthèse et du banc de filtres d'analyse) correspondant à une excitation unitaire du couple instant-fréquence $(n_0, k_0)$ du côté de l'émetteur où $n_0$ est l'indice d'un instant et $k_0$ est l'indice d'une sous-porteuse est donnée par :

$$\begin{aligned} r_{k',n'} &= \sum_{m=-\infty}^{+\infty} g_{k_0,n_0}(m) g^*_{k',n'} \\ &= e^{j\pi(k_0+\delta k)\delta n} e^{-j\frac{\pi}{2}(\delta k+\delta n)} \sum_{m=-\infty}^{+\infty} g(m) g(m - \delta n.M/2) e^{j\frac{2\pi}{M}\delta k\left(\frac{D}{2}-m\right)} \end{aligned} \qquad (5)$$

avec $\delta n = n' - n_0$ et $\delta k = k' - k_0$. Le filtre prototype est choisi de manière à ce que sa réponse impulsionnelle satisfasse à la condition d'orthogonalité réelle:

$$\Re e\left( \sum_{m=-\infty}^{+\infty} g_{k',n'}(m) g^*_{k,n}(m) \right) = \delta_{k,k'} \delta_{n,n'} \qquad (6)$$

où $\Re e$ est la partie réelle et $\delta$ est le symbole de Kronecker. On comprend de l'expression (5) que l'interférence affectant le symbole réel $x_{k,n}$ peut être éliminée dans la mesure où celle-ci est purement imaginaire. Plus précisément, l'interférence intrinsèque, $I_{k,n}$, c'est-à-dire l'interférence due aux symboles avoisinants $x_{k',n'}$, $(k',n') \in \Omega_{k,n}$ où $\Omega_{k,n}$ est le support temps-fréquence de la réponse du filtre transmultiplexeur centrée sur le symbole $x_{k,n}$ peut être exprimée par :

$$I_{k,n} = \sum_{(k',n') \in \Omega_{k,n}} x_{k',n'} \sum_{m=-\infty}^{+\infty} g_{k',n'}(m) g^*_{k,n}(m) \qquad (7)$$

Ce terme est purement imaginaire en raison de la modulation OQAM, autrement dit de l'alternance des valeurs réelles et des valeurs imaginaires due au terme de phase $e^{j\phi_{k,n}}$ dans l'expression (4). Pour cette raison, il est noté $I_{k,n} = ji_{k,n}$. On note que l'interférence $i_{k,n}$ est générée par les symboles passés et futurs, portés par la même porteuse $(k)$ et par les porteuses voisines.

On a représenté dans le tableau ci-dessous la réponse unitaire $r_{k,n}$ du filtre transmultiplexeur correspondant à une excitation unitaire du couple instant-fréquence $(n_0, k_0)$ dans le cas de l'utilisation du filtre PHYDIAS avec $K = 4$ :

|          | $n_0 - 3$ | $n_0 - 2$ | $n_0 - 1$ | $n_0$  | $n_0 + 1$ | $n_0 + 2$ | $n_0 + 3$ |
|----------|-----------|-----------|-----------|--------|-----------|-----------|-----------|
| $k_0 - 1$ | -0.043j   | -0.125    | 0,206j    | 0.239  | -0,206j   | -0.125    | 0.423j    |
| $k_0$     | -0.067    | 0         | 0.564     | 1      | 0.564     | 0         | -0.067    |
| $k_0 + 1$ | 0.423j    | -0.125    | -0,206j   | -0.239 | 0,206j    | -0.125    | -0.043j   |

Le signal reçu en bande de base, en sortie du filtre transmultiplexeur du récepteur, peut s'écrire :

$$y_{k,n} = h_{k,n}\left( x_{k,n} + ji_{k,n} \right) + v_{k,n} \qquad (8)$$

où $y_{k,n}$ est le symbole complexe reçu à l'instant $n$ sur la porteuse $k$, $i_{k,n}$ est le terme d'interférence précité, $h_{k,n}$ est le coefficient du canal à l'instant $n$ pour la porteuse $k$, et $v_{k,n}$ est un terme de bruit.

La modulation FBMC peut être utilisée pour des canaux MIMO. Dans ce cas l'émetteur comprend $N_t > 1$ antennes de transmission et le récepteur $N_r > 1$ antennes de réception. Les symboles à émettre sont multiplexés spatialement sur les différentes antennes d'émission, un flux de symboles étant transmis par antenne.

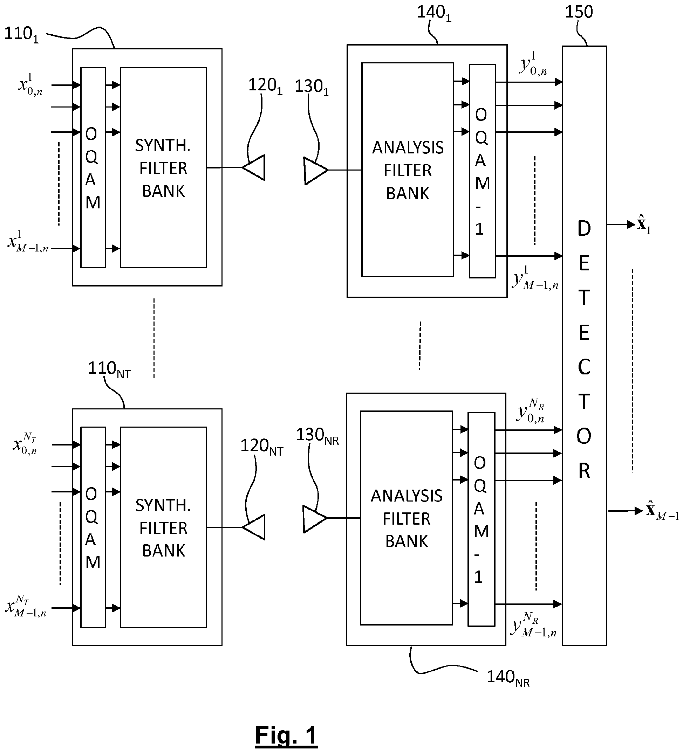

La Fig. 1 représente schématiquement un système d'émission/ réception FBMC-MIMO.

Les symboles à transmettre sont notés $x_{k,n}^{\ell}$ où $\ell = 1,...,N_T$ est l'indice de l'antenne de transmission. Ainsi, le symbole $x_{k,n}^{\ell}$ est transmis par l'antenne $\ell$, sur la porteuse $k$, au temps $n$. Chaque antenne $120_\ell$ est équipée d'un modulateur FBMC-OQAM, $110_\ell$, composé d'un modulateur OQAM suivi d'un banc de filtres de synthèse. Les bancs de filtres de synthèse associés aux différentes antennes d'émission ont des caractéristiques identiques. Ils sont notamment construits au moyen du même filtre prototype.

Le modulateur 110, génère par conséquent le signal:

$$s^{\ell}(m) = \sum_{k=0}^{M-1} \sum_{n \in \mathbb{Z}} x_{k,n}^{\ell} g_{k,n}(m) \tag{9}$$

Du côté du récepteur, les signaux sont reçus par les différentes antennes de réception, $130_p, p = 1,...,N_R$, chaque antenne de réception $130_p$ étant équipée d'un démodulateur FBMC-OQAM, $140_p$, composé d'un banc de filtres d'analyse suivi d'un démodulateur OQAM. Les bancs de filtres d'analyse associés aux différentes antennes de réception ont des caractéristiques identiques. Ils sont notamment construits au moyen du même filtre prototype. Les symboles complexes en sortie du démodulateur $140_p$, notés $y_{k,n}^{p}$, sont fournis à un détecteur, 150, donnant les symboles estimés $\hat{x}_{k,n}^{\ell}$.

Faisant abstraction pour simplifier de l'indice temporel, on note $\mathbf{x}_k = \left( x_{k,n}^1,...,x_{k,n}^{N_T} \right)^T$ le vecteur réel des symboles émis, $\mathbf{y}_k = \left( y_{k,n}^1,...,y_{k,n}^{N_R} \right)^T$ le vecteur complexe des symboles reçus, $\mathbf{i}_k = \left( i_{k,n}^1,...,i_{k,n}^{N_T} \right)^T$ le vecteur représentant l'interférence, et $\mathbf{H}_k$ la matrice complexe de taille $N_R \times N_T$ représentant le canal MIMO à la fréquence de la porteuse $k$, la relation (8) peut s'écrire sous forme vectorielle:

$$\mathbf{y}_k = \mathbf{H}_k \left( \mathbf{x}_k + j\mathbf{i}_k \right) + \mathbf{v}_k \tag{10}$$

où $v_k$ est un vecteur de bruit.

Différents types de détecteurs peuvent être envisagés, notamment un détecteur à maximum de vraisemblance ou détecteur ML (*Maximum Likelihood*). On rappelle que le principe du détecteur ML est de rechercher :

$$\hat{\mathbf{x}}_k = \arg \max_{\mathbf{x}_k} f_k \left( \mathbf{y}_k \big| \mathbf{x}_k \right) \tag{11}$$

où $f_k$ est la densité de probabilité marginale de $\mathbf{y}_k$ par rapport à $\mathbf{x}_k$ (chacun des éléments $y_{k,n}^{p}$ peut être considéré comme une variable aléatoire multidimensionnelle dépendant des $x_{k',n'}^{\ell} \in \Omega_{k,n}$ ).

Alternativement, on peut envisager un détecteur de type ZF (*Zero Forcing*) effectuant l'estimation :

$$\hat{\mathbf{x}}_k^{ZF} = \mathbf{W}_k \mathbf{y}_k \tag{12}$$

où $\mathbf{W}_k = \left( \mathbf{H}_k^H \mathbf{H}_k \right)^{-1} \mathbf{H}_k^H$ est la matrice pseudo-inverse de $\mathbf{H}_k$. Toutefois, on sait qu'une détection ZF amplifie le bruit de sorte et qu'elle n'est donc pas optimale. On préfère par conséquent utiliser un détecteur ML.

L'utilisation d'un détecteur ML est toutefois très complexe car, comme indiqué plus haut, l'interférence est générée par les symboles passés et futurs, tant par la porteuse courante du symbole considéré que les porteuses voisines. En supposant une parfaite connaissance du canal MIMO, le calcul nécessite la prise en compte d'un très grand nombre de possibilités.

Un système d'émission/ réception tel que représenté en Fig. 1, utilisant un détecteur ML à sorties souples, a été décrit dans l'article de M. Caus et al. intitulé « Low-complexity soft-output MIMO détection in FBMC/OQAM systems » publié dans Proc. of Int'l Conf. on Circuits, Systems, Communications and Computers (ICCSCC), Juillet 2014, pp. 25-29.

Plus précisément, il est proposé dans cet article de projeter l'équation (10) sur l'axe réel et l'axe imaginaire, soit :

$$\begin{pmatrix} \Re(\mathbf{y}_k) \\ \Im(\mathbf{y}_k) \end{pmatrix} = \begin{pmatrix} -\Im(\mathbf{H}_k) & \Re(\mathbf{H}_k) \\ \Re(\mathbf{H}_k) & \Im(\mathbf{H}_k) \end{pmatrix} \begin{pmatrix} \mathbf{i}_k \\ \mathbf{x}_k \end{pmatrix} + \begin{pmatrix} \Re(\mathbf{v}_k) \\ \Im(\mathbf{v}_k) \end{pmatrix} \qquad (13)$$

où $\Re(.)$ et $\Im(.)$ signifient respectivement la partie réelle et la partie imaginaire. On notera que tous les éléments intervenant dans les vecteurs et la matrice de l'équation (13) sont des réels.

$$\breve{\mathbf{H}}_k = \begin{pmatrix} -\Im(\mathbf{H}_k) & \Re(\mathbf{H}_k) \\ \Re(\mathbf{H}_k) & \Im(\mathbf{H}_k) \end{pmatrix}$$

La matrice $\breve{\mathbf{H}}_k$ de taille $2N_R \times 2N_T$ peut faire l'objet d'une décomposition QR :

$\breve{\mathbf{H}}_k = \mathbf{Q}_k \mathbf{R}_k$ où $\mathbf{Q}_k$ est une matrice orthonormale de taille $2N_R \times 2N_T$ et $\mathbf{R}_k$ est une matrice triangulaire supérieure de taille $2N_T \times 2N_T$, soit :

$$\mathbf{R}_k = \begin{pmatrix} \mathbf{R}_k^{11} & \mathbf{R}_k^{12} \\ \mathbf{0} & \mathbf{R}_k^{22} \end{pmatrix} \qquad (14)$$

où $\mathbf{R}_k^{11}, \mathbf{R}_k^{12}, \mathbf{R}_k^{22}$ sont des matrices réelles de taille $N_T \times N_T$.

Compte tenu des expressions (13) et (14), on a alors :

$$\mathbf{Q}_k^T \begin{pmatrix} \Re(\mathbf{y}_k) \\ \Im(\mathbf{y}_k) \end{pmatrix} = \begin{pmatrix} \mathbf{R}_k^{11} & \mathbf{R}_k^{12} \\ \mathbf{0} & \mathbf{R}_k^{22} \end{pmatrix} \begin{pmatrix} \mathbf{i}_k \\ \mathbf{x}_k \end{pmatrix} + \mathbf{Q}_k^T \begin{pmatrix} \Re(\mathbf{v}_k) \\ \Im(\mathbf{v}_k) \end{pmatrix} \qquad (15)$$

et donc, si l'on note $\tilde{\mathbf{y}}_k = \left( \mathbf{q}_k^{N_{T+1}}, ..., \mathbf{q}_k^{2N_T} \right)^T \breve{\mathbf{y}}_k$ la projection du vecteur réel $\breve{\mathbf{y}}_k = \begin{pmatrix} \Re(\mathbf{y}_k) \\ \Im(\mathbf{y}_k) \end{pmatrix}$ sur les $N_T$ derniers vecteurs colonnes de $\mathbf{Q}_k$, l'expression (13) donne :

$$\tilde{\mathbf{y}}_k = \mathbf{R}_k^{22} \mathbf{x}_k + \tilde{\mathbf{v}}_k \qquad (16)$$

où $\tilde{\mathbf{v}}_k = \left( \mathbf{q}_k^{N_{T+1}}, ..., \mathbf{q}_k^{2N_T} \right)^T \breve{\mathbf{v}}_k$ est le vecteur réel de bruit $\breve{\mathbf{v}}_k = \begin{pmatrix} \Re(\mathbf{v}_k) \\ \Im(\mathbf{v}_k) \end{pmatrix}$ projeté sur les $N_T$ derniers vecteurs

colonnes de $\mathbf{Q}_k$.

Il est essentiel de noter que le vecteur d'interférence $\mathbf{i}_k$ ne figure pas dans l'expression (16). Le vecteur bruit projeté, $\tilde{\mathbf{v}}_k$, n'étant pas spatialement corrélé, il est possible d'effectuer une détection ML au moyen de :

$$\hat{\mathbf{x}}_k = \arg\min_{\mathbf{x}_k} \left\| \tilde{\mathbf{y}}_k - \mathbf{R}_k^{22} \mathbf{x}_k \right\|^2 \qquad (17)$$

Cette détection est nettement plus simple que la détection ML exhaustive qui nécessiterait de prendre en compte symboles suivants et précédents, sur la porteuse courante et les porteuses voisines, pour tenir compte de l'interférence intrinsèque.

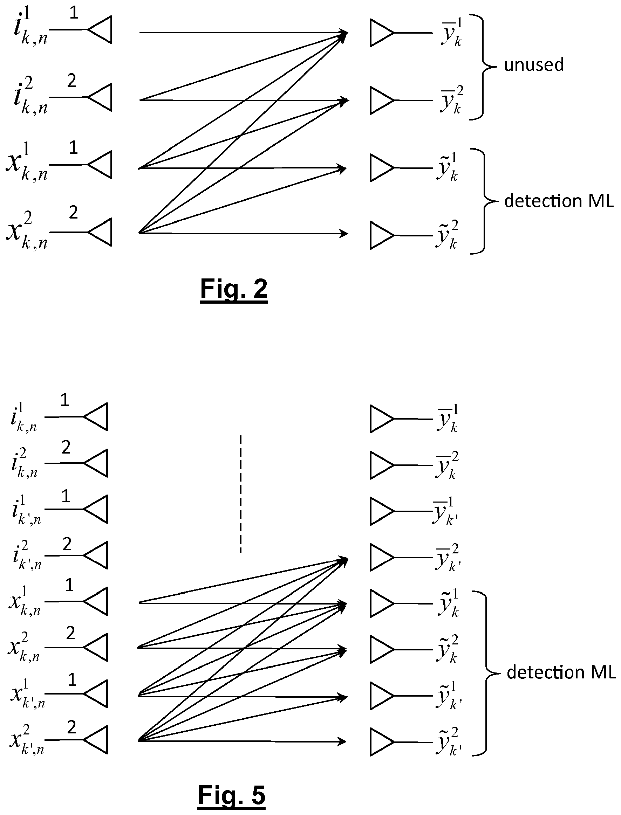

Toutefois, cette détection n'utilise pas toutes les informations disponibles sur les symboles $\mathbf{x}_k$ puisque les $N_T$ équations correspondant à la première ligne bloc de la matrice $\mathbf{R}_k$ ne sont pas exploitées (cf. expression (16)) comme illustré en relation avec la Fig. 2.

La Fig. 2 représente symboliquement une transmission de symboles entre l'émetteur et le récepteur d'un système d'émission FBMC-MIMO 2×2. Seule la porteuse $k$ a été considérée, le schéma étant identique pour toutes les porteuses $k = 0,...,M - 1$

A gauche de la figure, on a représenté par $x_{k,n}^1$ et $x_{k,n}^2$ les symboles respectivement émis par les antennes 1 et 2. De même, on a représenté par $i_{k,n}^1$ et $i_{k,n}^2$ les interférences intrinsèques générées par le filtre transmultiplexeur et affectant ces mêmes symboles.

$$\breve{\mathbf{y}}_k = \begin{pmatrix} \Re(\mathbf{y}_k) \\ \Im(\mathbf{y}_k) \end{pmatrix}$$

Du côté du récepteur, on a représenté les observables obtenus par projection du vecteur sur les $2N_T = 4$ colonnes de $\mathbf{Q}_k$.

Les symboles réels obtenus par projection sur les deux premières colonnes de la matrice $\mathbf{Q}_k$ sont notés $\overline{y}_{k,n}^1$ et $\overline{y}_{k,n}^2$, composantes de $\overline{\mathbf{y}}_k = \left( \mathbf{q}_k^1,...,\mathbf{q}_k^{N_T} \right)^T \breve{\mathbf{y}}_k$ vérifiant la relation :

$$\overline{\mathbf{y}}_k = \mathbf{R}_k^{11} \mathbf{i}_k + \mathbf{R}_k^{12} \mathbf{x}_k + \overline{\mathbf{v}}_k \qquad (18)$$

où $\overline{\mathbf{v}}_k$ est obtenu par projection du vecteur réel de bruit $\breve{\mathbf{v}}_k$ sur les deux premières colonnes de la matrice $\mathbf{Q}_k$.

De manière similaire, les symboles réels obtenus par projection sur les deux dernières colonnes de la matrice $\mathbf{Q}_k$ sont notés $\tilde{y}_{k,n}^1$ et $\tilde{y}_{k,n}^2$, composantes de $\tilde{\mathbf{y}}_k$.

On comprend que les observables $\overline{y}_{k,n}^1$ et $\overline{y}_{k,n}^2$ ne sont pas utilisés par la détection, bien qu'ils contiennent une information sur les symboles transmis $x_{k,n}^1$, $x_{k,n}^2$.

Il en résulte que ce détecteur ML n'est pas optimal au sens où il n'exploite pas complètement la diversité du système.

Pour améliorer les performances du détecteur, l'article précité préconise d'augmenter le nombre d'antennes et donc la diversité, ce qui rend le récepteur sensiblement plus complexe.

Le but de la présente invention est par conséquent de proposer un système d'émission/réception FBMC-MIMO à détection ML qui offre de meilleures performances en termes de taux d'erreur (BER) en fonction de rapport signal sur bruit (SNR) sans accroître pour autant le nombre d'antennes.

## EXPOSÉ DE L'INVENTION

La présente invention est définie par un émetteur de système de transmission FBMC-MIMO comprenant une pluralité ($N_T$) d'antennes d'émission et une même pluralité de modulateurs FBMC-OQAM, chaque modulateur FBMC-OQAM comprenant un modulateur OQAM et un banc de filtres de synthèse, chaque modulateur FBMC-OQAM transformant un bloc de symboles d'entrée en des symboles FBMC destinés à être transmis sur une antenne d'émission correspondante, ledit émetteur étant avantageux en ce que, pour chaque modulateur FBMC-OQAM, les symboles d'entrée d'un bloc sont groupés deux à deux à l'entrée de modules de combinaison linéaire, un module de combinaison linéaire recevant deux symboles d'entrée pour fournir un couple constitué d'un premier symbole combiné et d'un second symbole combiné, la combinaison linéaire n'étant pas réduite à une combinaison triviale, les symboles combinés ainsi obtenus étant entrelacés dans un entrelaceur avant d'être fournis au dit modulateur FBMC-OQAM.

Avantageusement, ladite combinaison linéaire est une rotation d'angle $\varphi$, l'angle $\varphi$ étant choisi distinct d'un multiple entier de $\dfrac{\pi}{2}$.

Dans ce cas, si les symboles d'entrée sont des symboles QPSK, l'angle $\varphi$ est choisi tel que $\varphi = 0.15\pi$.

Alternativement, si les symboles d'entrée sont des symboles 16-QAM, $\varphi$ est choisi tel que $\varphi = 0.09\pi$.

De préférence, ledit entrelaceur entrelace des symboles combinés d'un même couple de manière à ce qu'ils soient portés par des porteuses FBMC ne subissant pas simultanément un même évanouissement.

L'invention concerne en outre un récepteur de système de transmission FBMC-MIMO comprenant une pluralité ($N_R$) d'antennes de réception et une même pluralité de démodulateurs FBMC-OQAM, chaque démodulateur FBMC-OQAM comprenant un banc de filtres d'analyse suivi d'un démodulateur OQAM, chaque démodulateur FBMC-OQAM étant associé à une antenne de réception correspondante et fournissant à partir du signal reçu sur cette antenne une pluralité de symboles complexes $\left( y_{k,n}^{\ell}, \quad k = 0,...,M-1 \right)$ correspondant au différentes porteuses FBMC, ledit récepteur comportant :

une pluralité $M$ de multiplexeurs pour grouper par porteuse FBMC les symboles en sortie des démodulateurs FBMC-OQAM, les symboles ainsi groupés en sortie étant représentés sous la forme d'un vecteur complexe $\left( \mathbf{y}_k = \left( y_{k,n}^1,..., y_{k,n}^{N_R} \right)^T \right)$ de taille $N_R$, chaque vecteur complexe étant associé à une porteuse FBMC ;

un désentrelaceur pour désentrelacer les vecteurs complexes ainsi obtenus et les fournir sous forme de couples de vecteurs complexes ($\mathbf{y}_k, \mathbf{y}_{k'}$) ;

une pluralité $M$ de modules de projection, chaque module de projection étant associé à une porteuse FBMC, $k = 0,...,M - 1$, et projetant le vecteur complexe associé à cette porteuse sur les $N_T$ dernières colonnes d'une matrice orthonormale $\mathbf{Q}_k$ de taille $2N_R \times 2N_T$ obtenue par décomposition QR de la matrice

$$\breve{\mathbf{H}}_k = \begin{pmatrix} -\Im(\mathbf{H}_k) & \Re(\mathbf{H}_k) \\ \Re(\mathbf{H}_k) & \Im(\mathbf{H}_k) \end{pmatrix}$$

où $\mathbf{H}_k$ est la matrice de taille $N_R \times N_T$ représentant le canal MIMO pour la porteuse $k$, chaque module de projection fournissant un vecteur réel projeté ($\tilde{\mathbf{y}}_k$) de taille $2N_T$ ;

une pluralité de modules de détection à maximum de vraisemblance, chacun de ces modules recevant un couple de vecteurs réels ainsi projetés et en déduisant les symboles émis ($\hat{\mathbf{x}}_k, \hat{\mathbf{x}}_{k+1}$) les plus probables.

Avantageusement, chaque module de détection à maximum de vraisemblance recevant deux vecteurs réels projetés $\tilde{\mathbf{y}}_k$, $\tilde{\mathbf{y}}_{k'}$ recherche les symboles émis $\hat{\mathbf{x}}_k$, $\hat{\mathbf{x}}_{k+1}$ les plus probables au moyen de

$$\hat{\mathbf{x}}_{k,k+1} = \arg\min_{\mathbf{x}_k,\mathbf{x}_{k+1}} \left\| \tilde{\mathbf{y}}_{k,k'} - \mathbf{R}_{k,k'}^{22}(\mathbf{A})\mathbf{x}_{k,k+1} \right\|^2$$

avec $\mathbf{x}_{k,k+1} = \begin{pmatrix} \mathbf{x}_k \\ \mathbf{x}_{k+1} \end{pmatrix}$, $\tilde{\mathbf{y}}_{k,k'} = \begin{pmatrix} \tilde{\mathbf{y}}_k \\ \tilde{\mathbf{y}}_{k'} \end{pmatrix}$,

$$\mathbf{R}_{k,k'}^{22}(\mathbf{A}) = \begin{pmatrix} \mathbf{R}_k^{22} & \mathbf{0} \\ \mathbf{0} & \mathbf{R}_{k'}^{22} \end{pmatrix} \mathbf{R}_{\mathbf{A}}$$

où les matrices $\mathbf{R}_k^{22}$ et $\mathbf{R}_{k'}^{22}$ ont été respectivement obtenues par décomposition

QR des matrice $\breve{\mathbf{H}}_k$ et $\breve{\mathbf{H}}_{k'}$ et $\mathbf{R_A}$ est la matrice définie par :

$$
\mathbf{R_A} = \begin{pmatrix}
a_{11} & a_{12} & 0 & 0 & \cdots & 0 & 0 & 0 & \cdots & 0 \\
0 & 0 & 0 & \cdots & 0 & a_{11} & a_{12} & 0 & \cdots & 0 \\
0 & 0 & a_{11} & a_{12} & \ddots & 0 & 0 & 0 & \ddots & \vdots \\
\vdots & \vdots & \ddots & \cdots & \cdots & \ddots & \ddots & \ddots & \ddots & \vdots \\
0 & 0 & \cdots & \ddots & \cdots & \cdots & \cdots & 0 & a_{11} & a_{12} \\
a_{21} & a_{22} & 0 & 0 & \cdots & 0 & 0 & 0 & \cdots & 0 \\
0 & 0 & 0 & \cdots & 0 & a_{21} & a_{22} & 0 & \cdots & 0 \\
0 & 0 & a_{21} & a_{22} & \ddots & 0 & 0 & 0 & \cdots & 0 \\
\vdots & \vdots & \ddots & \cdots & \cdots & \ddots & \ddots & \ddots & \ddots & \vdots \\
0 & 0 & 0 & \cdots & \cdots & \cdots & \cdots & 0 & a_{21} & a_{22}
\end{pmatrix}
$$

$$
\mathbf{A} = \begin{pmatrix} a_{11} & a_{12} \\ a_{21} & a_{22} \end{pmatrix}
$$

où $\quad$ est la matrice représentant la combinaison linéaire des symboles $\mathbf{x}_k$, $\mathbf{x}_{k+1}$, utilisée à l'émission.

Avantageusement, la matrice A est une matrice de rotation d'un angle $\varphi$, choisi distinct d'un multiple entier de $\frac{\pi}{2}$.

Les modules de détection à maximum de vraisemblance sont de préférence à sorties souples et utilisent chacun un décodeur par sphère.

## BRÈVE DESCRIPTION DES DESSINS

D'autres caractéristiques et avantages de l'invention apparaîtront à la lecture de modes de réalisation préférentiels de l'invention, en référence aux figures jointes parmi lesquelles :

La Fig. 1 représente de manière schématique un système d'émission/ réception FBMC-MIMO connu de l'état de la technique ;
La Fig. 2 représente de manière schématique une transmission de symboles entre l'émetteur et le récepteur d'un système selon la Fig. 1 ;
La Fig. 3 représente de manière schématique un émetteur d'un système FBMC-MIMO selon un mode de réalisation de l'invention ;
La Fig. 4 représente de manière schématique un récepteur d'un système FBMC-MIMO selon un mode de réalisation de l'invention ;
La Fig. 5 représente de manière schématique une transmission de symboles entre un émetteur selon la Fig. 3 et un récepteur selon la Fig. 4 ;
Les Figs. 6A et 6B illustrent les performances d'un système FBMC-MIMO selon un exemple de réalisation de l'invention dans le cas d'émission de symboles QPSK.

## EXPOSÉ DÉTAILLÉ DE MODES DE RÉALISATION PARTICULIERS

L'idée à la base de la présente invention est de grouper les symboles à transmettre par couples et de combiner les symboles de chaque couple sous forme de deux combinaisons distinctes, les symboles combinés ainsi obtenus étant transmis sur deux porteuses FBMC distinctes. Il est ainsi proposé d'introduire un degré de diversité supplémentaire en répartissant l'information relative à un symbole à transmettre sur deux porteuses indépendantes.

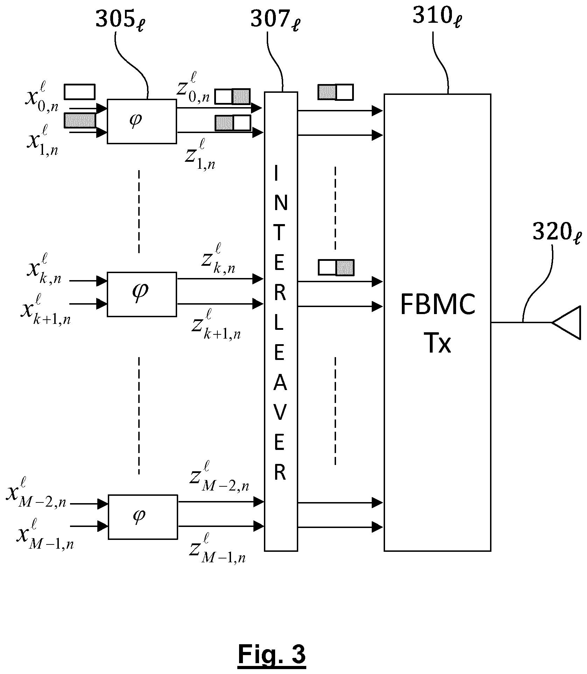

La Fig. 3 représente de manière schématique un émetteur d'un système FBMC-MIMO selon un mode de réalisation de l'invention.

On a représenté ici l'émetteur relatif à une antenne $\ell = 1,..., N_T$ quelconque, tous les émetteurs possédant la même structure. En particulier, les bancs de filtres de synthèse associés aux différentes antennes d'émission ont les mêmes caractéristiques.

L'émetteur comprend un modulateur FBMC-OQAM $310_\ell$ constitué d'un modulateur OQAM et d'un banc de filtres de synthèse pouvant être réalisé dans le domaine temporel (filtre polyphasé) ou dans le domaine fréquentiel comme indiqué dans la partie introductive. Ce modulateur FBMC-OQAM est identique aux modulateurs $110_1,...,110_{N_T}$ représentés en Fig. 1.

L'émetteur reçoit en entrée un bloc de symboles réels à transmettre représenté par $x_{0,n}^\ell,..., x_{M-1,n}^\ell$, le symbole $x_{k,n}^\ell$ étant relatif à l'instant $n$ (ou bloc $n$), à la porteuse $k$ et à l'antenne $\ell$.

Les symboles sont groupés par couples et un module de combinaison $305_\ell$ calcule deux combinaisons linéaires distinctes pour chaque couple de symboles. Il convient de noter que les symboles d'un même couple ne sont pas nécessairement contigus. Toutefois, dans un but de simplification de la présentation et sans perte de généralité, nous supposerons dans la suite que les symboles d'un même couple sont effectivement contigus. Ainsi, deux symboles consécutifs, $x_{2\kappa,n}^\ell$ et $x_{2\kappa+1,n}^\ell$, respectivement de rang pair et impair sont combinés sous la forme suivante :

$$\begin{pmatrix} z_{k,n}^\ell \\ z_{k+1,n}^\ell \end{pmatrix} = \mathbf{A}_k \begin{pmatrix} x_{k,n}^\ell \\ x_{k+1,n}^\ell \end{pmatrix} \tag{19}$$

où les $\mathbf{A}_k$ sont des matrices $2\times2$ non triviales, c'est-à-dire dont les éléments sont tous non nuls. En particulier, les matrices $\mathbf{A}_k$ sont distinctes de la matrice identité et de la matrice nulle.

Les matrices $\mathbf{A}_k$ peuvent dépendre de $k$ mais elles sont de préférence choisies identiques $\mathbf{A}_k = \mathbf{A}$. Selon un exemple de réalisation, on choisira A égale à une matrice de rotation :

$$\mathbf{A} = \mathbf{A}_\varphi = \begin{pmatrix} \cos\varphi & \sin\varphi \\ -\sin\varphi & \cos\varphi \end{pmatrix} \tag{20}$$

avec $\varphi \neq \mu\dfrac{\pi}{2}$ où $\mu$ est un entier relatif.

Les symboles combinés sont ensuite entrelacés par un entrelaceur, $307_\ell$, de manière à ce que deux symboles combinés $z_{k,n}^\ell$ et $z_{k+1,n}^\ell$ issus d'un même couple soient transmis sur des porteuses différentes. Ces porteuses seront avantageusement choisies indépendantes, autrement dit suffisamment espacées pour ne pas subir d'évanouissement en même temps. La fonction d'entrelacement $\sigma$ est identique quel que soit l'émetteur.

On supposera dans la suite qu'en sortie de l'entrelaceur, le symbole combiné $z_{k,n}^\ell$ est porté par la porteuse $k$ et le symbole combiné $z_{k+1,n}^\ell$ est porté par la porteuse $k$'. Ainsi après entrelacement, $z_{k',n}^\ell$ correspond à $z_{k+1,n}^\ell$.

Les symboles combinés ainsi entrelacés sont fournis au modulateur FBMC-OQAM pour être transmis sur le canal MIMO.

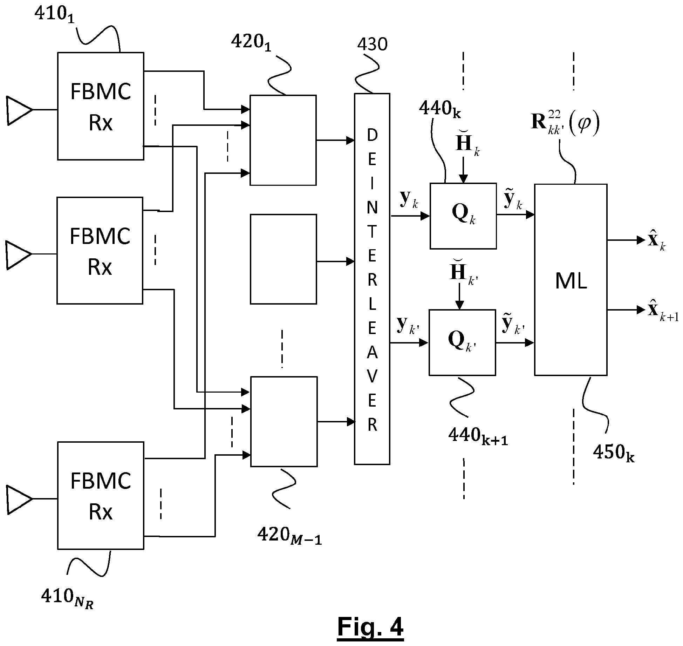

La Fig. 4 représente de manière schématique un récepteur d'un système FBMC-MIMO selon un mode de réalisation de l'invention.

Ce récepteur comprend une pluralité de démodulateurs FBMC-OQAM, $410_1,...,410_{N_R}$, chaque démodulateur étant associé à une antenne de réception $\ell = 1,...,N_R$. Chaque démodulateur comprend un banc de filtres d'analyse, pouvant être réalisé dans le domaine temporel ou dans le domaine fréquentiel, et un démodulateur OQAM. Ces démodulateurs ont la même structure que ceux représentés par $140_1,...,140_{N_R}$ en Fig. 1. En particulier, les bancs de filtres d'analyse associés aux différentes de réception ont les mêmes caractéristiques.

Chaque démodulateur FBMC-OQAM, $410_\ell$, fournit un bloc de symboles complexes $y_{k,n}^\ell$ , $k = 1,...,M -1$ à l'instant $n$. Ces blocs de symboles sont regroupés par porteuse dans les multiplexeurs $420_1,...,420_{M-1}$, chaque multiplexeur $420_k$ étant associé à une porteuse $k$ et fournissant les symboles $y_{k,n}^\ell$ , $\ell = 1,..., N_R$, sous la forme d'un vecteur complexe $\mathbf{y}_k = \left( y_{k,n}^1,..., y_{k,n}^{N_R} \right)^T$ de taille $N_R$.

Les vecteurs de symboles ainsi obtenus sont ensuite désentrelacés par un désentrelaceur effectuant l'opération inverse ($\sigma^{-1}$) de celle effectuée au niveau des émetteurs.

On considérera dans la suite deux vecteurs $\mathbf{y}_k$ et $\mathbf{y}_{k'}$ correspondant à deux porteuses $k$ et $k + 1$ avant entrelacement.

Le vecteur $\mathbf{y}_k$ est projeté sur les $N_T$ derniers vecteurs colonnes de la matrice $\mathbf{Q}_k$, obtenue par décomposition QR de la matrice $\breve{\mathbf{H}}_k$ définie plus haut. Le vecteur ainsi projeté est un vecteur réel, noté $\tilde{\mathbf{y}}_k$, de taille $N_T$.

De même, le vecteur $\mathbf{y}_{k'}$ est projeté sur les $N_T$ derniers vecteurs colonnes de la matrice $\mathbf{Q}_{k'}$, obtenue par décomposition QR de la matrice $\breve{\mathbf{H}}_{k'}$ . Le vecteur ainsi projeté est un vecteur réel, noté $\tilde{\mathbf{y}}_{k'}$, également de taille $N_T$.

D'après (16), on a les relations :

$$\tilde{\mathbf{y}}_k = \mathbf{R}_k^{22}\mathbf{z}_k + \tilde{\mathbf{v}}_k \tag{21-1}$$

$$\tilde{\mathbf{y}}_{k'} = \mathbf{R}_{k'}^{22}\mathbf{z}_{k'} + \tilde{\mathbf{v}}_{k'} \tag{21-2}$$

ce que l'on peut formaliser de manière plus synthétique par :

$$\begin{pmatrix} \tilde{\mathbf{y}}_k \\ \tilde{\mathbf{y}}_{k'} \end{pmatrix} = \begin{pmatrix} \mathbf{R}_k^{22} & \mathbf{0} \\ \mathbf{0} & \mathbf{R}_{k'}^{22} \end{pmatrix} \begin{pmatrix} \mathbf{z}_k \\ \mathbf{z}_{k'} \end{pmatrix} + \begin{pmatrix} \tilde{\mathbf{v}}_k \\ \tilde{\mathbf{v}}_{k'} \end{pmatrix} \tag{22}$$

Soit, compte tenu du fait que $\begin{pmatrix} z_{k,n}^\ell \\ z_{k',n}^\ell \end{pmatrix} = \mathbf{A}_\varphi \begin{pmatrix} x_{k,n}^\ell \\ x_{k+1,n}^\ell \end{pmatrix}$ pour $\ell = 1,..., N_R$ :

$$\begin{pmatrix} \tilde{\mathbf{y}}_k \\ \tilde{\mathbf{y}}_{k'} \end{pmatrix} = \mathbf{R}_{k,k'}^{22}(\varphi) \begin{pmatrix} \mathbf{x}_k \\ \mathbf{x}_{k+1} \end{pmatrix} + \begin{pmatrix} \tilde{\mathbf{v}}_k \\ \tilde{\mathbf{v}}_{k'} \end{pmatrix} \tag{23-1}$$

avec :

$$\mathbf{R}_{k,k'}^{22}(\varphi) = \begin{pmatrix} \mathbf{R}_k^{22} & \mathbf{0} \\ \mathbf{0} & \mathbf{R}_{k'}^{22} \end{pmatrix} \mathbf{R}_\varphi \tag{23-2}$$

où $\mathbf{R}_\varphi$ est la matrice de taille $2N_T \times 2N_T$ donnée par :

$$\mathbf{R}_\varphi = \begin{pmatrix} \cos\varphi & \sin\varphi & 0 & 0 & \cdots & 0 & 0 & 0 & \cdots & 0 \\ 0 & 0 & 0 & \cdots & 0 & \cos\varphi & \sin\varphi & 0 & \cdots & 0 \\ 0 & 0 & \cos\varphi & \sin\varphi & \ddots & 0 & 0 & 0 & \ddots & \vdots \\ \vdots & \vdots & \ddots & \cdots & \cdots & \ddots & \ddots & \ddots & \ddots & \vdots \\ 0 & 0 & \cdots & \ddots & \cdots & \cdots & \cdots & 0 & \cos\varphi & \sin\varphi \\ -\sin\varphi & \cos\varphi & 0 & 0 & \cdots & 0 & 0 & 0 & \cdots & 0 \\ 0 & 0 & 0 & \cdots & 0 & -\sin\varphi & \cos\varphi & 0 & \cdots & 0 \\ 0 & 0 & -\sin\varphi & \cos\varphi & \ddots & 0 & 0 & 0 & \cdots & 0 \\ \vdots & \vdots & \ddots & \cdots & \cdots & \ddots & \ddots & \ddots & \ddots & \vdots \\ 0 & 0 & 0 & \cdots & \cdots & \cdots & \cdots & 0 & -\sin\varphi & \cos\varphi \end{pmatrix}$$

$$(23\text{-}3)$$

Soit par exemple dans le cas de 2 antennes d'émission :

$$\mathbf{R}_\varphi = \begin{pmatrix} \cos\varphi & \sin\varphi & 0 & 0 \\ 0 & 0 & \cos\varphi & \sin\varphi \\ -\sin\varphi & \cos\varphi & 0 & 0 \\ 0 & 0 & -\sin\varphi & \cos\varphi \end{pmatrix} \qquad (23\text{-}4)$$

De manière plus générale, lorsqu'une matrice de combinaison linéaire non triviale $\mathbf{A} = \begin{pmatrix} a_{11} & a_{12} \\ a_{21} & a_{22} \end{pmatrix}$ est utilisée pour combiner les symboles au niveau de l'émetteur, les expressions (23-1), (23-2) et (23-3) deviennent :

$$\begin{pmatrix} \tilde{\mathbf{y}}_k \\ \tilde{\mathbf{y}}_{k'} \end{pmatrix} = \mathbf{R}_{k,k'}^{22}(\mathbf{A}) \begin{pmatrix} \mathbf{x}_k \\ \mathbf{x}_{k+1} \end{pmatrix} + \begin{pmatrix} \tilde{\mathbf{v}}_k \\ \tilde{\mathbf{v}}_{k'} \end{pmatrix} \qquad (24\text{-}1)$$

$$\mathbf{R}_{k,k'}^{22}(\mathbf{A}) = \begin{pmatrix} \mathbf{R}_k^{22} & \mathbf{0} \\ \mathbf{0} & \mathbf{R}_{k'}^{22} \end{pmatrix} \mathbf{R}_\mathbf{A} \qquad (24\text{-}2)$$

où $\mathbf{R_A}$ est la matrice de taille $2N_T \times 2N_T$ donnée par :

$$\mathbf{R_A} = \begin{pmatrix} a_{11} & a_{12} & 0 & 0 & \cdots & 0 & 0 & 0 & \cdots & 0 \\ 0 & 0 & 0 & \cdots & 0 & a_{11} & a_{12} & 0 & \cdots & 0 \\ 0 & 0 & a_{11} & a_{12} & \ddots & 0 & 0 & 0 & \ddots & \vdots \\ \vdots & \vdots & \ddots & \cdots & \cdots & \ddots & \ddots & \ddots & \ddots & \vdots \\ 0 & 0 & \cdots & \ddots & \cdots & \cdots & \cdots & 0 & a_{11} & a_{12} \\ a_{21} & a_{22} & 0 & 0 & \cdots & 0 & 0 & 0 & \cdots & 0 \\ 0 & 0 & 0 & \cdots & 0 & a_{21} & a_{22} & 0 & \cdots & 0 \\ 0 & 0 & a_{21} & a_{22} & \ddots & 0 & 0 & 0 & \cdots & 0 \\ \vdots & \vdots & \ddots & \cdots & \cdots & \ddots & \ddots & \ddots & \ddots & \vdots \\ 0 & 0 & 0 & \cdots & \cdots & \cdots & \cdots & 0 & a_{21} & a_{22} \end{pmatrix} \qquad (24\text{-}3)$$

Dans tous les cas, les vecteurs réels projetés, $\tilde{\mathbf{y}}_k, \tilde{\mathbf{y}}_{k'}$, sont fournis à un détecteur ML, $450_k$, qui estime les vecteurs $\hat{\mathbf{x}}_k$ et $\hat{\mathbf{x}}_{k+1}$ les plus probables compte tenu de ces observables, des matrices de canal $\breve{\mathbf{H}}_k$ et $\breve{\mathbf{H}}_{k'}$ (d'où se déduisent les matrices triangulaires supérieures $\mathbf{R}_k^{22}$ et $\mathbf{R}_{k'}^{22}$ ) et la matrice de combinaison linéaire **A**.

Autrement dit, les vecteurs $\hat{\mathbf{x}}_k$ et $\hat{\mathbf{x}}_{k+1}$ sont déterminés par :

$$\hat{\mathbf{x}}_{k,k+1} = \underset{\mathbf{x}_k, \mathbf{x}_{k+1}}{\arg\min} \left\| \tilde{\mathbf{y}}_{k,k'} - \mathbf{R}_{k,k'}^{22}(\mathbf{A}) \mathbf{x}_{k,k+1} \right\|^2 \qquad (25)$$

et plus particulièrement lorsque la matrice A est une matrice de rotation :
où

$$\hat{\mathbf{x}}_{k,k+1} = \underset{\mathbf{x}_k, \mathbf{x}_{k+1}}{\arg\min} \left\| \tilde{\mathbf{y}}_{k,k'} - \mathbf{R}_{k,k'}^{22}(\varphi) \mathbf{x}_{k,k+1} \right\|^2 \qquad (26)$$

$$\mathbf{x}_{k,k+1} = \begin{pmatrix} \mathbf{x}_k \\ \mathbf{x}_{k+1} \end{pmatrix} \text{ et } \tilde{\mathbf{y}}_{k,k'} = \begin{pmatrix} \tilde{\mathbf{y}}_k \\ \tilde{\mathbf{y}}_{k'} \end{pmatrix}.$$

Le détecteur ML peut être du type à valeurs souples comme décrit dans l'article de M. Caus *et al.* précité. Alternativement, il peut être à décodeur par sphère (*Sphere Decoder*).

La Fig. 5 représente de manière schématique une transmission de symboles entre un émetteur et un récepteur d'un système FBMC-MIMO selon un exemple de réalisation de l'invention.

Le système FBMC-MIMO considéré est à nouveau $2 \times 2$, autrement dit à 2 antennes d'émission et 2 antennes de réception. Les émetteurs ont la structure représentée en Fig. 3 et le récepteur a la structure représentée en Fig. 4.

A gauche de la Fig. 5, on a représenté par $x_{k,n}^1$ et $x_{k,n}^2$ les symboles respectivement émis par les antennes 1 et 2 sur la porteuse $k$ et par $x_{k',n}^1$ et $x_{k',n}^2$ les symboles émis par ces mêmes antennes sur la porteuse $k'$ avec $k' = \sigma(k)$.

De même, on a représenté par $i_{k,n}^1$ et $i_{k,n}^2$ les interférences intrinsèques générées par le filtre transmultiplexeur et affectant ces mêmes symboles sur la porteuse $k$ et par $i_{k,n}^1$ et $i_{k,n}^2$

Du côté du récepteur, on a représenté par $\tilde{\mathbf{y}}_k = \begin{pmatrix} \tilde{y}_k^1 \\ \tilde{y}_k^2 \end{pmatrix}$ et $\tilde{\mathbf{y}}_{k'} = \begin{pmatrix} \tilde{y}_{k'}^1 \\ \tilde{y}_{k'}^2 \end{pmatrix}$ les observables obtenus par projection

des vecteurs $\breve{\mathbf{y}}_k = \begin{pmatrix} \Re(\mathbf{y}_k) \\ \Im(\mathbf{y}_k) \end{pmatrix}$ et $\breve{\mathbf{y}}_{k'} = \begin{pmatrix} \Re(\mathbf{y}_{k'}) \\ \Im(\mathbf{y}_{k'}) \end{pmatrix}$ respectivement sur les $N_T$ derniers vecteurs colonnes de $\mathbf{Q}_k$ et $\mathbf{Q}_{k'}$.

Le fait de combiner deux porteuses permet de doubler le nombre d'observables par rapport à la situation de l'art antérieur représentée en Fig. 2. Tout se passe en fait comme si l'on avait doublé virtuellement le nombre d'antennes d'émission et de réception.

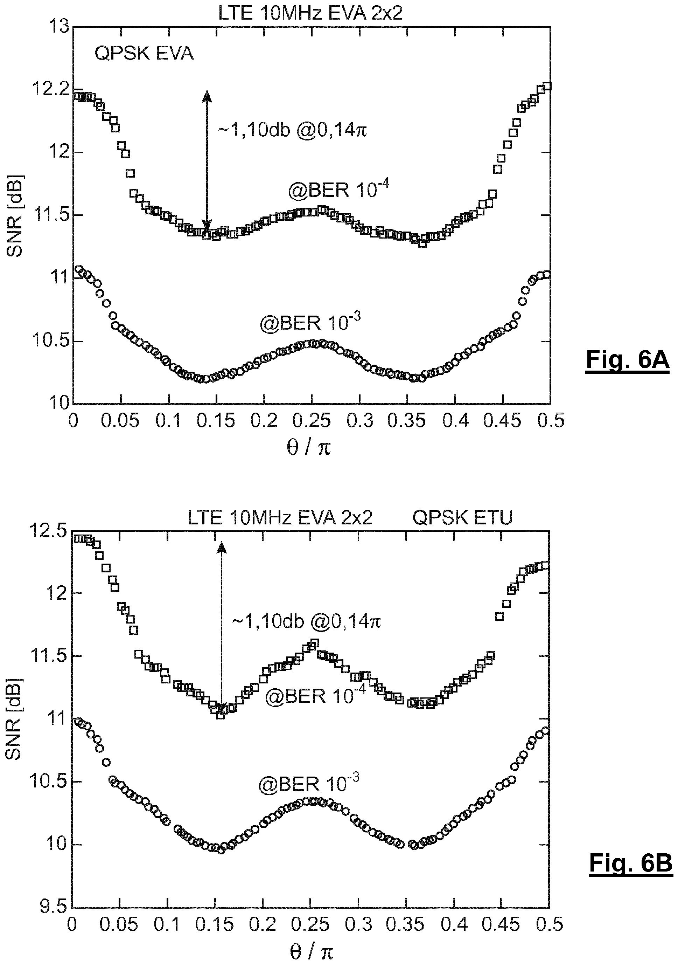

Les Figs. 6A et 6B illustrent les performances d'un système FBMC-MIMO selon un exemple de réalisation de l'invention, respectivement pour un canal LTE EVA (Extended Vehicular A) et un canal LTE ETU (Extended Typical Urban).

Le système FBMC-MIMO considéré était à $N_T$ = 2 antennes d'émission et $N_R$ = 2 antennes de réception. Le nombre de porteuses a été choisi égal à 50 parmi 1024. Un code convolutif de rendement 2/3 a été utilisé.

Les symboles à transmettre étaient des symboles QPSK. Le détecteur ML a été choisi à sorties souples comme dans l'article de M. Caus *et al.* précité.

On remarque en Fig. 6A qu'un gain de 1,10 dB de rapport signal sur bruit (SNR) peut être atteint pour un taux d'erreur (BER) de 10⁻⁴ si l'on choisit $\varphi$ = 0.15z . Les performances du système connu de l'art antérieur correspondent à $\varphi$ = 0 (pas de rotation).

De manière similaire, en Fig. 6B, on voit qu'un gain de 1,5 dB de rapport signal sur bruit peut être atteint dès lors que l'on choisit $\varphi$ = 0.15z .

De manière plus générale, on peut montrer qu'à chaque type d'alphabet de modulation correspond un angle $\varphi$ optimal. Ainsi, lorsque les symboles à émettre appartiennent à un alphabet 16-QAM, l'angle optimal est $\varphi$ = 0.09$\pi$.

**Revendications**

1. Système de transmission FBMC-MIMO comprenant un émetteur et un récepteur,

ledit émetteur comprenant une pluralité ($N_T$) d'antennes d'émission et une même pluralité de modulateurs FBMC-OQAM, chaque modulateur FBMC-OQAM comprenant un modulateur OQAM et un banc de filtres de synthèse, chaque modulateur FBMC-OQAM transformant un bloc de symboles d'entrée en des symboles FBMC destinés à être transmis sur une antenne d'émission correspondante, et pour chaque modulateur FBMC-OQAM, les symboles d'entrée d'un bloc étant groupés deux à deux à l'entrée de modules de combinaison linéaire, un module de combinaison linéaire (305$_\ell$) recevant deux symboles d'entrée pour fournir un couple constitué d'un premier symbole combiné et d'un second symbole combiné, la combinaison linéaire n'étant pas réduite à une combinaison triviale et étant réalisée au moyen de coefficients de combinaison tous non nuls, les symboles combinés ainsi obtenus étant entrelacés dans un entrelaceur (305$_\ell$) avant d'être fournis audit modulateur FBMC-OQAM,

ledit récepteur comprenant une pluralité ($N_R$) d'antennes de réception et une même pluralité de démodulateurs FBMC-OQAM (410$_1$,...,410$_{N_R}$), chaque démodulateur FBMC-OQAM comprenant un banc de filtres d'analyse suivi d'un démodulateur OQAM, chaque démodulateur FBMC-OQAM étant associé à une antenne de réception correspondante et fournissant à partir du signal reçu sur cette antenne une pluralité de symboles complexes ($y_{k,n}^\ell$ , $k = 0,...,M-1$) correspondant aux différentes porteuses FBMC, ledit récepteur comportant en outre :

une pluralité $M$ de muliplexeurs (420$_1$,...,420$_{M-1}$) pour grouper par porteuse FBMC les symboles en sortie des démodulateurs FBMC-OQAM, les symboles ainsi groupés en sortie étant représentés sous la forme d'un vecteur complexe ($\mathbf{y}_k = \left(y_{k,n}^1,...,y_{k,n}^{N_R}\right)^T$) de taille $N_R$, chaque vecteur complexe étant associé à une porteuse FBMC ;

un désentrelaceur (430) pour désentrelacer les vecteurs complexes ainsi obtenus et les fournir sous forme de couples de vecteurs complexes ($\mathbf{y}_k, \mathbf{y}_{k'}$) ;

une pluralité $M$ de modules de projection ( $440_k$ ), chaque module de projection étant associé à une porteuse FBMC, $k = 0,...,M$ -1, et projetant le vecteur complexe associé à cette porteuse sur les $N_T$ dernières colonnes d'une matrice orthonormale $\mathbf{Q}_k$ de taille $2N_R \times 2N_T$ obtenue par décomposition QR de la matrice

$$\breve{\mathbf{H}}_k = \begin{pmatrix} -\Im(\mathbf{H}_k) & \Re(\mathbf{H}_k) \\ \Re(\mathbf{H}_k) & \Im(\mathbf{H}_k) \end{pmatrix}$$ où $\mathbf{H}_k$ est la matrice de taille $N_R \times N_T$ représentant le canal MIMO pour la porteuse $k$ , chaque module de projection fournissant un vecteur réel projeté ($\tilde{\mathbf{y}}_k$) de taille $2N_T$ ;

une pluralité de modules de détection à maximum de vraisemblance ( $450_k$ ), chacun de ces modules recevant un couple de vecteurs réels ainsi projetés et en déduisant un couple de symboles émis ($\hat{\mathbf{x}}_k, \hat{\mathbf{x}}_{k+1}$) les plus probables ayant été combinés au moyen d'une combinaison linéaire à l'émission.

2. Système de transmission FBMC-MIMO selon la revendication 1, **caractérisé en ce que** chaque module de combinaison linéaire effectue la combinaison linéaire de deux symboles d'entrée au moyen de la matrice

$$\mathbf{A} = \begin{pmatrix} a_{11} & a_{12} \\ a_{21} & a_{22} \end{pmatrix}$$ et que le module de détection à maximum de vraisemblance recevant deux vecteurs réels

projetés $\tilde{\mathbf{y}}_k, \tilde{\mathbf{y}}_{k'}$ recherche les symboles émis $\hat{\mathbf{x}}_k, \hat{\mathbf{x}}_{k+1}$ les plus probables au moyen de

$$\hat{\mathbf{x}}_{k,k+1} = \arg\min_{\mathbf{x}_k, \mathbf{x}_{k+1}} \left\| \tilde{\mathbf{y}}_{k,k'} - \mathbf{R}_{k,k'}^{22}(\mathbf{A}) \mathbf{x}_{k,k+1} \right\|^2 \qquad \text{avec} \qquad \mathbf{x}_{k,k+1} = \begin{pmatrix} \mathbf{x}_k \\ \mathbf{x}_{k+1} \end{pmatrix}, \qquad \tilde{\mathbf{y}}_{k,k'} = \begin{pmatrix} \tilde{\mathbf{y}}_k \\ \tilde{\mathbf{y}}_{k'} \end{pmatrix},$$

$$\mathbf{R}_{k,k'}^{22}(\mathbf{A}) = \begin{pmatrix} \mathbf{R}_k^{22} & \mathbf{0} \\ \mathbf{0} & \mathbf{R}_{k'}^{22} \end{pmatrix} \mathbf{R}_{\mathbf{A}}$$ où les matrices $\mathbf{R}_k^{22}$ et $\mathbf{R}_{k'}^{22}$ ont été respectivement obtenues par décomposition

QR des matrice $\breve{\mathbf{H}}_k$ et $\breve{\mathbf{H}}_{k'}$ et $\mathbf{R_A}$ est la matrice définie par :

$$\mathbf{R_A} = \begin{pmatrix} a_{11} & a_{12} & 0 & 0 & \cdots & 0 & 0 & 0 & \cdots & 0 \\ 0 & 0 & 0 & \cdots & 0 & a_{11} & a_{12} & 0 & \cdots & 0 \\ 0 & 0 & a_{11} & a_{12} & \ddots & 0 & 0 & 0 & \ddots & \vdots \\ \vdots & \vdots & \ddots & \cdots & \cdots & \ddots & \ddots & \ddots & \ddots & \vdots \\ 0 & 0 & \cdots & \ddots & \cdots & \cdots & \cdots & 0 & a_{11} & a_{12} \\ a_{21} & a_{22} & 0 & 0 & \cdots & 0 & 0 & 0 & \cdots & 0 \\ 0 & 0 & 0 & \cdots & 0 & a_{21} & a_{22} & 0 & \cdots & 0 \\ 0 & 0 & a_{21} & a_{22} & \ddots & 0 & 0 & 0 & \cdots & 0 \\ \vdots & \vdots & \ddots & \cdots & \cdots & \ddots & \ddots & \ddots & \ddots & \vdots \\ 0 & 0 & 0 & \cdots & \cdots & \cdots & \cdots & 0 & a_{21} & a_{22} \end{pmatrix}$$

3. Système de transmission FBMC-MIMO selon la revendication 2, **caractérisé en ce que** la matrice A est une matrice de rotation d'un angle $\varphi$, choisi distinct d'un multiple entier de $\dfrac{\pi}{2}$ .

4. Système de transmission FBMC-MIMO selon la revendication 3, **caractérisé en ce que** les symboles d'entrée sont des symboles QPSK et que $\varphi = 0.15\pi$.

5. Système de transmission FBMC-MIMO selon la revendication 3, **caractérisé en ce que** les symboles d'entrée sont des symboles 16-QAM et que $\varphi = 0.09\pi$.

6. Système de transmission FBMC-MIMO selon l'une quelconque des revendications précédentes, **caractérisé en ce que** ledit entrelaceur entrelace des symboles combinés d'un même couple de manière à ce qu'ils soient portés par des porteuses FBMC ne subissant pas simultanément un même évanouissement.

7. Système de transmission FBMC-MIMO selon l'une des revendications précédentes, **caractérisé en ce que** les modules de détection à maximum de vraisemblance sont à sorties souples.

8. Système de transmission FBMC-MIMO selon l'une des revendications 1 à 6, **caractérisé en ce que** les modules de détection à maximum de vraisemblance utilisent chacun un décodeur par sphère.

**Patentansprüche**

1. FBMC-MIMO-Übertragungssystem, das einen Sender und einen Empfänger umfasst,

wobei der Sender eine Vielzahl ($N_T$) von Sendeantennen und die gleiche Vielzahl von FBMC-OQAM-Modulatoren umfasst, wobei jeder FBMC-OQAM-Modulator einen OQAM-Modulator und eine Bank mit synthetischen Filtern umfasst, wobei jeder FBMC-OQAM-Modulator einen Block von Eingangssymbolen in FBMC-Symbole umwandelt, die dazu bestimmt sind, auf einer entsprechenden Sendeantenne gesendet zu werden, und die Eingangssymbole eines Blocks am Eingang von Linearkombinationsmodulen paarweise für jeden FBMC-OQAM-Modulator gruppiert werden, wobei ein Linearkombinationsmodul ($305_l$) zwei Eingangssymbole empfängt, um ein Paar bereitzustellen, das aus einem ersten kombinierten Symbol und einem zweiten kombinierten Symbol besteht, wobei die lineare Kombination nicht auf eine triviale Kombination reduziert wird und mittels Kombinationskoeffizienten ausgeführt wird, die alle ungleich Null sind, wobei die so erhaltenen kombinierten Symbole in einem Verschachteler ($305_l$) verschachtelt werden, bevor sie dem FBMC-OQAM-Modulator bereitgestellt werden,
wobei der Empfänger eine Vielzahl ($N_R$) von Empfangsantennen und die gleiche Vielzahl von FBMC-OQAM-Demodulatoren ($410_1$, ..., $410_{NR}$) umfasst, wobei jeder FBMC-OQAM-Demodulator eine Bank mit Analysefiltern umfasst, gefolgt von einem OQAM-Demodulator, wobei jeder FBMC-OQAM-Demodulator einer entsprechenden Empfangsantenne zugeordnet ist und aus dem auf dieser Antenne empfangenen Signal eine Vielzahl komplexer Symbole ( $y_{k,n}^{\ell}$ , $k = 0, ..., M-1$ ) bereitstellt, die den verschiedenen FBMC-Trägern entspricht, wobei der Empfänger ferner Folgendes umfasst:

Eine Vielzahl M von Multiplexern ($420_1$, ...,$420_{M-1}$) zum Gruppieren der Symbole am Ausgang der FBMC-OQAM-Demodulatoren nach FBMC-Trägern, wobei die so am Ausgang gruppierten Symbole in Form eines komplexen Vektors ( $\mathbf{y}_k = \left( y_{k,n}^1, ..., y_{k,n}^{N_R} \right)^T$ ) der Größe $N_R$ dargestellt werden, wobei jeder komplexe Vektor einem FBMC-Träger zugeordnet ist;
einen Entschachteler (430) zum Entschachteln der so erhaltenen komplexen Vektoren und zum Bereitstellen derselben in Form von Paaren komplexer Vektoren ($\mathbf{y}_k, \mathbf{y}_{k'}$);
eine Vielzahl M von Projektionsmodulen ($440_k$), wobei jedes Projektionsmodul einem FBMC-Träger zugeordnet ist, $k = 0, ..., M-1$, und den komplexen Vektor projiziert, der diesem Träger auf die letzten Nr-Spalten einer orthonormalen Matrix $\mathbf{Q}_k$ der Größe $2N_R \times 2N_T$, zugeordnet ist, die durch QR-Zerlegung der Matrix

$$\breve{\mathbf{H}}_k = \begin{pmatrix} -\Im(\mathbf{H}_k) & \Re(\mathbf{H}_k) \\ \Re(\mathbf{H}_k) & \Im(\mathbf{H}_k) \end{pmatrix}$$

erhalten wird, wobei $\mathbf{H}_k$ die Matrix der Größe $N_R \times N_T$ ist, die den MIMO-Kanal für den Träger $k$ darstellt, wobei jedes Projektionsmodul einen projizierten realen Vektor ($\tilde{\mathbf{y}}_k$) der Größe $2N_T$ bereitstellt;
eine Vielzahl von Maximum-Likelihood-Detektionsmodulen ($450_k$), wobei jedes dieser Module ein Paar so projizierter realer Vektoren empfängt und daraus ein Paar der wahrscheinlichsten gesendeten Symbole ($\hat{\mathbf{x}}_k, \hat{\mathbf{x}}_{k+1}$) ableitet, die zuvor mittels einer Linearkombination mit der Sendung kombiniert wurden.

2. FBMC-MIMO-Übertragungssystem nach Anspruch 1, **dadurch gekennzeichnet, dass** jedes Linearkombinationsmodul die Linearkombination zweier Eingangssymbole mittels der Matrix $\mathbf{A} = \begin{pmatrix} a_{11} & a_{12} \\ a_{21} & a_{22} \end{pmatrix}$ durchführt und dass das Maximum-Likelihood-Detektionsmodul zwei projizierte reale Vektoren $\tilde{\mathbf{y}}_k, \tilde{\mathbf{y}}_{k'}$ empfängt und nach den wahrschein-

lichsten gesendeten Symbolen $\hat{\mathbf{x}}_k, \hat{\mathbf{x}}_{k+1}$ mittels $\hat{\mathbf{x}}_{k,k+1} = \arg\min_{\mathbf{x}_k, \mathbf{x}_{k+1}} \left\| \tilde{\mathbf{y}}_{k,k'} - \mathbf{R}_{k,k'}^{22}(\mathbf{A}) \mathbf{x}_{k,k+1} \right\|^2$ mit

$\mathbf{x}_{k,k+1} = \begin{pmatrix} \mathbf{x}_k \\ \mathbf{x}_{k+1} \end{pmatrix}$, $\tilde{\mathbf{y}}_{k,k'} = \begin{pmatrix} \tilde{\mathbf{y}}_k \\ \tilde{\mathbf{y}}_{k'} \end{pmatrix}$, $\mathbf{R}_{k,k'}^{22}(\mathbf{A}) = \begin{pmatrix} \mathbf{R}_k^{22} & \mathbf{0} \\ \mathbf{0} & \mathbf{R}_{k'}^{22} \end{pmatrix} \mathbf{R}_A$ sucht, wobei die Matrizen $\mathbf{R}_k^{22}$ und

$\mathbf{R}_{k'}^{22}$ jeweils durch QR-Zerlegung der Matrizen $\breve{\mathbf{H}}_k$ und $\breve{\mathbf{H}}_{k'}$ erhalten wurden und $\mathbf{R_A}$ die Matrix ist, die definiert ist durch:

$$\mathbf{R_A} = \begin{pmatrix} a_{11} & a_{12} & 0 & 0 & \cdots & 0 & 0 & 0 & \cdots & 0 \\ 0 & 0 & 0 & \cdots & 0 & a_{11} & a_{12} & 0 & \cdots & 0 \\ 0 & 0 & a_{11} & a_{12} & \ddots & 0 & 0 & 0 & \ddots & \vdots \\ \vdots & \vdots & \ddots & \cdots & \cdots & \ddots & \ddots & \ddots & \ddots & \vdots \\ 0 & 0 & \cdots & \ddots & \cdots & \cdots & \cdots & 0 & a_{11} & a_{12} \\ a_{21} & a_{22} & 0 & 0 & \cdots & 0 & 0 & 0 & \cdots & 0 \\ 0 & 0 & 0 & \cdots & 0 & a_{21} & a_{22} & 0 & \cdots & 0 \\ 0 & 0 & a_{21} & a_{22} & \ddots & 0 & 0 & 0 & \cdots & 0 \\ \vdots & \vdots & \ddots & \cdots & \cdots & \ddots & \ddots & \ddots & \ddots & \vdots \\ 0 & 0 & 0 & \cdots & \cdots & \cdots & \cdots & 0 & a_{21} & a_{22} \end{pmatrix}$$

3. FBMC-MIMO-Übertragungssystem nach Anspruch 2, **dadurch gekennzeichnet, dass** die Matrix **A** eine Rotati-

onsmatrix eines Winkels $\varphi$ ist, der getrennt von einem ganzzahligen Vielfachen von $\dfrac{\pi}{2}$ gewählt wird.

4. FBMC-MIMO-Übertragungssystem nach Anspruch 3, **dadurch gekennzeichnet, dass** die Eingangssymbole QPSK-Symbole sind und dass $\varphi = 0.15\pi$.

5. FBMC-MIMO-Übertragungssystem nach Anspruch 3, **dadurch gekennzeichnet, dass** die Eingangssymbole 16-QAM-Symbole sind und dass $\varphi = 0.09\pi$.

6. FBMC-MIMO-Übertragungssystem nach einem der vorhergehenden Ansprüche, **dadurch gekennzeichnet, dass** der Verschachteler kombinierte Symbole desselben Paares derart verschachtelt, dass sie von FBMC-Trägern übertragen werden, die nicht gleichzeitig denselben Schwund erleiden.

7. FBMC-MIMO-Übertragungssystem nach einem der vorhergehenden Ansprüche, **dadurch gekennzeichnet, dass** die Maximum-Likelihood-Detektionsmodule flexible Ausgänge aufweisen.

8. FBMC-MIMO-Übertragungssystem nach einem der Ansprüche 1 bis 6, **dadurch gekennzeichnet, dass** die Maximum-Likelihood-Detektionsmodule jeweils einen Decoder pro Sphäre verwenden.

**Claims**

1. An FBMC-MIMO transmission system comprising a transmitter and a receiver,

   said transmitter comprising a plurality ($N_T$) of transmitting antennas and a same plurality of FBMC-OQAM modulators, each FBMC-OQAM modulator comprising an OQAM modulator and a synthesis filterbank, each FBMC-OQAM modulator transforming a block of input symbols into FBMC symbols intended to be transmitted on a corresponding transmitting antenna, and for each FBMC-OQAM modulator, the input symbols of a block being gathered two by two at the input of linear combination modules, a linear combination module ($305_\ell$) receiving two input symbols to provide a pair consisting of a first combined symbol and a second combined symbol, the linear combination not being reduced to a trivial combination and being made by means of combination coefficients being all non-zero, the combined symbols thus obtained being interleaved in an interleaver ($305_\ell$) before being provided to said FBMC-OQAM modulator,
   said receiver comprising a plurality ($N_R$) of receiving antennas and a same plurality of FBMC-OQAM demodulators ($410_1, ..., 410_{N_R}$), each FBMC-OQAM demodulator comprising an analysis filterbank followed by an OQAM demodulator, each FBMC-OQAM demodulator being associated with a corresponding receiving antenna and providing, from the signal received on this antenna, a plurality of complex symbols (

   $$y_{k,n}^\ell, k = 0, ..., M - 1$$

   ) corresponding to the different FBMC carriers, said receiver further including:

   a plurality M of multiplexers ($420_1, ..., 420_{M-1}$) to gather per FBMC carrier the symbols as an output from the FBMC-OQAM demodulators, the symbols thus gathered as an output being represented as a complex

   vector ($\mathbf{y}_k = \left(y_{k,n}^1, ..., y_{k,n}^{N_R}\right)^T$) having the size $N_R$, each complex vector being associated with an FBMC carrier;
   a de-interleaver (430) to de-interleave the complex vectors thus obtained and provide the same as pairs of complex vectors ($\mathbf{y}_k, \mathbf{y}_{k'}$) ;
   a plurality M of projection modules ($440_k$), each projection module being associated with an FBMC carrier, $k = 0, ..., M - 1$, and projecting the complex vector associated with this carrier onto the last $N_T$ columns of an orthonormal matrix $\mathbf{Q}_k$ having the size $2N_R \times 2N_T$ obtained by QR decomposition of the matrix

   $$\breve{\mathbf{H}}_k = \begin{pmatrix} -\Im(\mathbf{H}_k) & \Re(\mathbf{H}_k) \\ \Re(\mathbf{H}_k) & \Im(\mathbf{H}_k) \end{pmatrix}$$

   where $\mathbf{H}_k$ is the matrix having the size $N_R \times N_T$ representing the MIMO channel for the carrier $k$, each projection module providing a projected real vector ($\tilde{\mathbf{y}}_k$) having the size $2N_T$ ;
   a plurality of maximum likelihood detection modules ($450_k$), each of these modules receiving a pair of real vectors thus projected and by deducing a pair of the most probable transmitted symbols ($\hat{\mathbf{x}}_k, \hat{\mathbf{x}}_{k+1}$) having being combined by means of a linear combination at transmission.

2. The FBMC-MIMO transmission system according to claim 1, **characterised in that** each linear combination module makes the linear combination of two input symbols by means of the matrix $\mathbf{A} = \begin{pmatrix} a_{11} & a_{12} \\ a_{21} & a_{22} \end{pmatrix}$ and **in that** the maximum likelihood detection module receiving two projected real vectors $\tilde{\mathbf{y}}_k, \tilde{\mathbf{y}}_{k'}$ searches for the most probable

   transmitted symbols $\hat{\mathbf{x}}_k, \hat{\mathbf{x}}_{k+1}$ by means of $\hat{\mathbf{x}}_{k,k+1} = \arg\min_{\mathbf{x}_k, \mathbf{x}_{k+1}} \left\| \tilde{\mathbf{y}}_{k,k'} - \mathbf{R}_{k,k'}^{22}(\mathbf{A}) \mathbf{x}_{k,k+1} \right\|^2$ with $\mathbf{x}_{k,k+1} = \begin{pmatrix} \mathbf{x}_k \\ \mathbf{x}_{k+1} \end{pmatrix}$ ,

   $\tilde{\mathbf{y}}_{k,k'} = \begin{pmatrix} \tilde{\mathbf{y}}_k \\ \tilde{\mathbf{y}}_{k'} \end{pmatrix}$ , $\mathbf{R}_{k,k'}^{22}(\mathbf{A}) = \begin{pmatrix} \mathbf{R}_k^{22} & \mathbf{0} \\ \mathbf{0} & \mathbf{R}_{k'}^{22} \end{pmatrix} \mathbf{R}_\mathbf{A}$ where the matrices $\mathbf{R}_k^{22}$ and $\mathbf{R}_{k'}^{22}$ have been respectively obtained by QR decomposition of the matrices $\breve{\mathbf{H}}_k$ and $\breve{\mathbf{H}}_{k'}$ and $\mathbf{R}_\mathbf{A}$ is the matrix defined by:

$$\mathbf{R_A} = \begin{pmatrix} a_{11} & a_{12} & 0 & 0 & \cdots & 0 & 0 & 0 & \cdots & 0 \\ 0 & 0 & 0 & \cdots & 0 & a_{11} & a_{12} & 0 & \cdots & 0 \\ 0 & 0 & a_{11} & a_{12} & \ddots & 0 & 0 & 0 & \ddots & \vdots \\ \vdots & \vdots & \ddots & \cdots & \cdots & \ddots & \ddots & \ddots & \ddots & \vdots \\ 0 & 0 & \cdots & \ddots & \cdots & \cdots & \cdots & 0 & a_{11} & a_{12} \\ a_{21} & a_{22} & 0 & 0 & \cdots & 0 & 0 & 0 & \cdots & 0 \\ 0 & 0 & 0 & \cdots & 0 & a_{21} & a_{22} & 0 & \cdots & 0 \\ 0 & 0 & a_{21} & a_{22} & \ddots & 0 & 0 & 0 & \cdots & 0 \\ \vdots & \vdots & \ddots & \cdots & \cdots & \ddots & \ddots & \ddots & \ddots & \vdots \\ 0 & 0 & 0 & \cdots & \cdots & \cdots & \cdots & 0 & a_{21} & a_{22} \end{pmatrix}.$$

3. The FBMC-MIMO transmission system according to claim 2, **characterised in that** the matrix A is a matrix of rotation by an angle <p, selected distinct from an integer multiple of $\frac{\pi}{2}$.

4. The FBMC-MIMO transmission system according to claim 3, **characterised in that** the input symbols are QPSK symbols and that $\varphi = 0.15\pi$.

5. The FBMC-MIMO transmission system according to claim 3, **characterised in that** the input symbols are 16-QAM symbols and that $\varphi = 0.09\pi$.

6. The FBMC-MIMO transmission system according to any of the preceding claims, **characterised in that** said interleaver interleaves combined symbols of a same pair so that they are carried by FBMC carriers not simultaneously undergoing a same fading.

7. The FBMC-MIMO transmission system according to one of the preceding claims, **characterised in that** the maximum likelihood detection modules have flexible outputs.

8. The FBMC-MIMO transmission system according to one of claims 1 to 6, **characterised in that** the maximum likelihood detection modules each use one decoder per sphere.

**Fig. 1**

$i^1_{k,n}$ —1—◁

$i^2_{k,n}$ —2—◁

$x^1_{k,n}$ —1—◁

$x^2_{k,n}$ —2—◁

▷— $\bar{y}^1_k$

▷— $\bar{y}^2_k$

▷— $\tilde{y}^1_k$

▷— $\tilde{y}^2_k$

} unused

} detection ML

## Fig. 2

$i^1_{k,n}$ —1—◁

$i^2_{k,n}$ —2—◁

$i^1_{k',n}$ —1—◁

$i^2_{k',n}$ —2—◁

$x^1_{k,n}$ —1—◁

$x^2_{k,n}$ —2—◁

$x^1_{k',n}$ —1—◁

$x^2_{k',n}$ —2—◁

▷— $\bar{y}^1_k$

▷— $\bar{y}^2_k$

▷— $\bar{y}^1_{k'}$

▷— $\bar{y}^2_{k'}$

▷— $\tilde{y}^1_k$

▷— $\tilde{y}^2_k$

▷— $\tilde{y}^1_{k'}$

▷— $\tilde{y}^2_{k'}$

} detection ML

## Fig. 5

**Fig. 3**

**Fig. 4**

Fig. 6A

Fig. 6B

## RÉFÉRENCES CITÉES DANS LA DESCRIPTION

**Documents brevets cités dans la description**

• FR 3003420 A

**Littérature non-brevet citée dans la description**

• **B. HIROSAKI.** An orthogonally multiplexed QAM system using the discrète Fourier transform. *IEEE Trans on Comm.,* Juillet 1981, vol. 29 (7), 982-989
• **P. SIOHAN et al.** Analysis and design of OFDM/OQAM systems based on filterbank theory. *IEEE Trans. on signal processing,* Mai 2002, vol. 50 (5), 1170-1183

• **M. CAUS et al.** Low-complexity soft-output MIMO détection in FBMC/OQAM systems. *Proc. of Int'l Conf. on Circuits, Systems, Communications and Computers (ICCSCC),* Juillet 2014, 25-29